# EUROPEAN PATENT SPECIFICATION

(11) **EP 2 416 021 B1**
(45) Date of publication and mention of the grant of the patent: **13.01.2016**
(21) Application number: 11174326.6
(22) Date of filing: 18.07.2011
(51) Int. Cl.: F16B 21/06

(54) **Single-sided fitting**
Einseitiges Befestigungsstück
Installation monoface

(30) Priority: 03.08.2010 GB 201012987
(43) Date of publication of application: 08.02.2012
(73) Proprietor: Airbus Operations Limited, Bristol BS34 7PA (GB)
(72) Inventor: Bridgeley, Rowan, BRISTOL, BRISTOL BS99 7AR (GB); Hobday, John, BRISTOL, BRISTOL BS99 7AR (GB)
(74) Representative: Ribeiro, James Michael

(56) References cited:
- EP-A1- 0 958 957
- GB-A- 1 418 003

## Description

### FIELD OF THE INVENTION

The present invention relates to a single-sided fitting.

### BACKGROUND OF THE INVENTION

A bracket or other object can be fixed to a panel by a nut and a bolt, but this requires access to both the front and rear faces of the panel.

So-called "blind rivets" are known, which do not require access to the rear side of the panel. However, such blind rivets cannot be removed easily.

GB1418003 describes fasteners for inserting into preformed holes having a head and a plurality of separate spaced apart legs projecting from the head, each leg having a plurality of outwardly directed protrusions for engagement with sides of a hole.

EP0958957 describes a vehicle seat retaining arrangement having two side retaining members adapted to be received in a recess of a supporting element. The arrangement further includes a spreader located between the two side retaining members which may be moved towards the recess in which the retaining members are received, thereby forcing the retaining members outwardly into contact with the walls of the recess.

### SUMMARY OF THE INVENTION

A first aspect of the invention provides a single-sided fitting comprising a shaft with two or more axially extending legs, each leg having a catch which extends radially outwardly from the leg; a clamping plate with two or more holes each receiving a respective one of the legs; a projection which is carried by the clamping plate and extends axially between the legs towards the catches, the clamping plate and projection being axially movable along the shaft to a locking position where the projection is positioned between the catches thus preventing the catches from moving radially inwardly; and means for preventing the clamping plate and projection from withdrawing back along the shaft away from the catches after they have been moved to the locking position.

A further aspect of the invention provides an assembly of parts comprising a structure with a hole passing from a front face of the structure to a rear face of the structure; and a single-sided fitting according to the first aspect of the invention arranged with the shaft passing through the hole, the clamping plate in its locking position applying a compressive force to the front face of the structure, the projection positioned between the catches thus preventing the catches from moving radially inwardly, and the catches applying a compressive force to the rear face of the structure.

The structure may comprise a panel, a pair of panels which are fastened together by the fitting, or any other structure.

A further aspect of the invention provides a method of attaching a single-sided fitting to a structure, the single-sided fitting comprising a shaft with two or more axially extending legs, each leg having a catch which extends radially outwardly from the leg; a clamping plate with two or more holes each receiving a respective one of the legs, and a projection which is carried by the clamping plate and extends axially between the legs towards the catches, the method comprising:
passing the shaft and the catches through a hole from a front face of the structure to a rear face of the structure;
moving the catches radially outwardly so they cannot be withdrawn back through the hole;
moving the clamping plate and projection axially along the shaft to a locking position in which the clamping plate engages the front face of the structure and the projection is positioned between the catches, thus preventing the catches from moving radially inwardly;
applying a compressive force to the front face of the structure with the clamping plate;
applying a compressive force to the rear face of the structure with the catches; and
preventing the clamping plate and projection from withdrawing back along the shaft away from the catches after they have been moved to the locking position.

The single-sided fitting can be removed easily by reversing the procedure described above, that is by withdrawing the clamping plate and projection back along the shaft away from the catches; moving the catches radially inwardly; and withdrawing the shaft and the catches from the hole.

Compressing the structure between the clamping plate and the catches makes the fitting secure and unlikely to come loose due to vibration. This makes the single-sided fitting particularly well suited for use in a vehicle such as an aircraft which is prone to vibration.

The means for preventing the clamping plate and projection from moving back along the shaft may have a number of forms. For instance it may comprise an internally threaded nut which is carried by the shaft, the clamping plate being positioned between the nut and the catches, wherein the nut can be spun along the shaft to engage the clamping plate in its locking position. Alternatively the shaft may have a series of closely spaced resilient teeth which retract one by one as the clamping plate is moved along the shaft until it engages the structure, at which point the teeth prevent the clamping plate from withdrawing easily. Alternatively the shaft may have a series of closely spaced rigid teeth which are engaged by a resilient catch on the clamping plate, in the manner of a zip-tie. Alternatively, a coil spring or other resilient means may be used to urge the clamping plate towards its locking position in order to prevent it from withdrawing.

The single-sided fitting may be used as a fastener for fastening together a pair of panels, as a bracket for mounting a component to a panel or other structure, or for any other suitable purpose.

Typically the projection passes through the hole and beyond the rear face of the structure, although it may lie flush with the rear face.

The shaft may have two legs only, or it may have three or more legs.

The legs may be completely separate parts, but more preferably they are joined together at a head of the shaft remote from the catches. This provides a resilient force which causes the catches to spring radially outwardly after they have passed through the hole.

The catches may be at an intermediate position along the length of the legs, but more preferably they are at a distal end of the legs.

### BRIEF DESCRIPTION OF THE DRAWINGS

Embodiments of the invention will now be described with reference to the accompanying drawings, in which:
Figure 1 is a plan view of a bracket;
Figure 2 is a plan view of the bracket with the washer and nut removed;
Figure 3 is a side view of the bracket with the washer and nut removed;
Figure 4 is a rear view of the bracket with the washer and nut removed, viewed from the left of Figure 3;
Figure 5 is a section taken along a line A-A in Figure 3;
Figure 6 is a plan view of a washer;
Figure 7 is a front view of the washer, viewed from the left of Figure 6;
Figure 8 is a plan view of a nut;
Figure 9 is a rear view of the nut, viewed from the left of Figure 8;
Figure 10 is a plan view showing the bracket coupled to a panel with the washer in its locking position and the nut in its retracted position; and
Figure 11 is a plan view showing the bracket fixed to the panel with both the nut and washer in their locking positions.

### DETAILED DESCRIPTION OF EMBODIMENT(S)

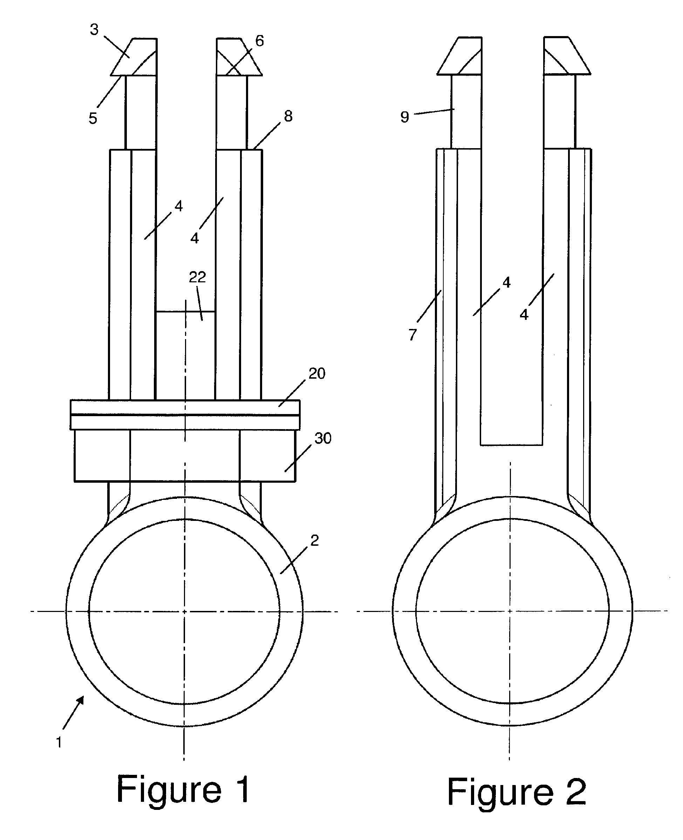

A single-sided bracket 1 shown in Figure 1 comprises a head 2, and a shaft comprising two legs 4 which extend axially from the head 2 as shown most clearly in Figure 2. Each leg has a catch 3 with a rear-directed face or lip 5 extending radially outwardly from a distal end 6 of the leg. The legs 4 are each formed with an external thread 7. The thread 7 extends from the head 2 to a point 8 which is set back from the catches by an unthreaded gap 9. The unthreaded gap 9 enables the catches to be relatively compact in a radial direction.

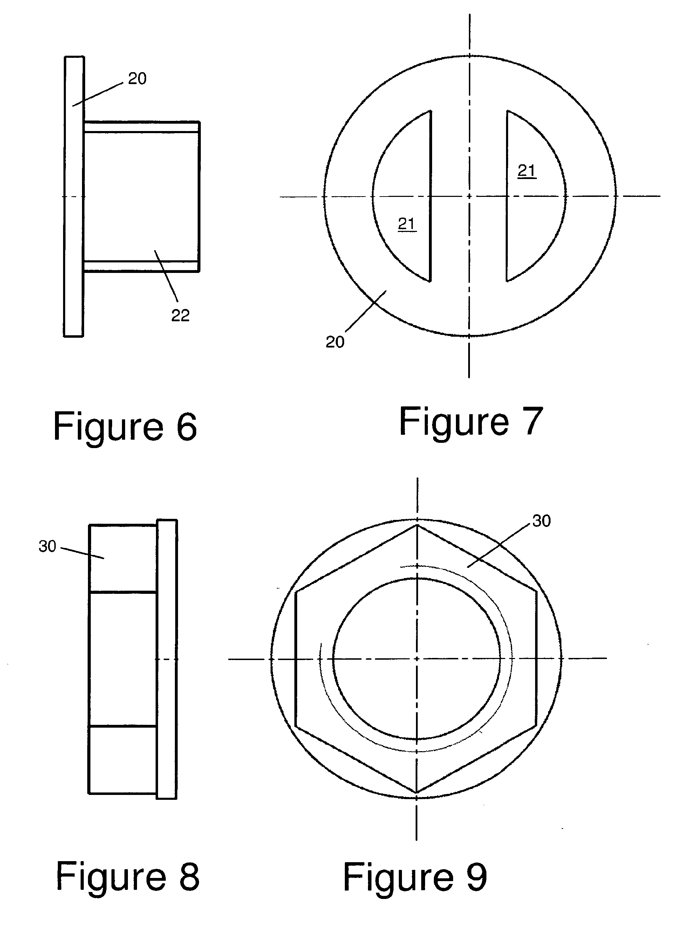

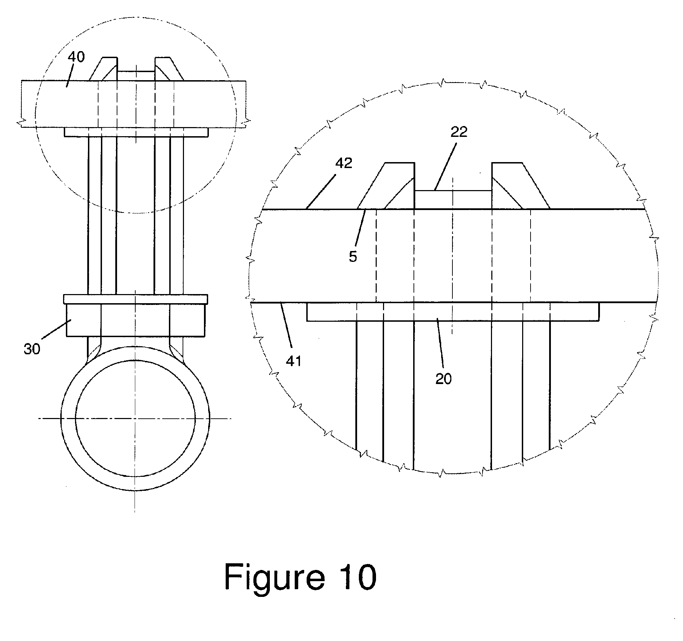

The shaft carries a washer shown in Figures 6 and 7. The washer comprises a clamping plate 20 with two holes 21 each receiving a respective one of the legs 4. A projection or tab 22 is carried by the clamping plate 20 and extends axially between the legs 4 towards their distal ends 6. The clamping plate 20 and projection 22 can be slid axially along the shaft from the retracted position shown in Figure 1 to a locking position shown in Figure 10.

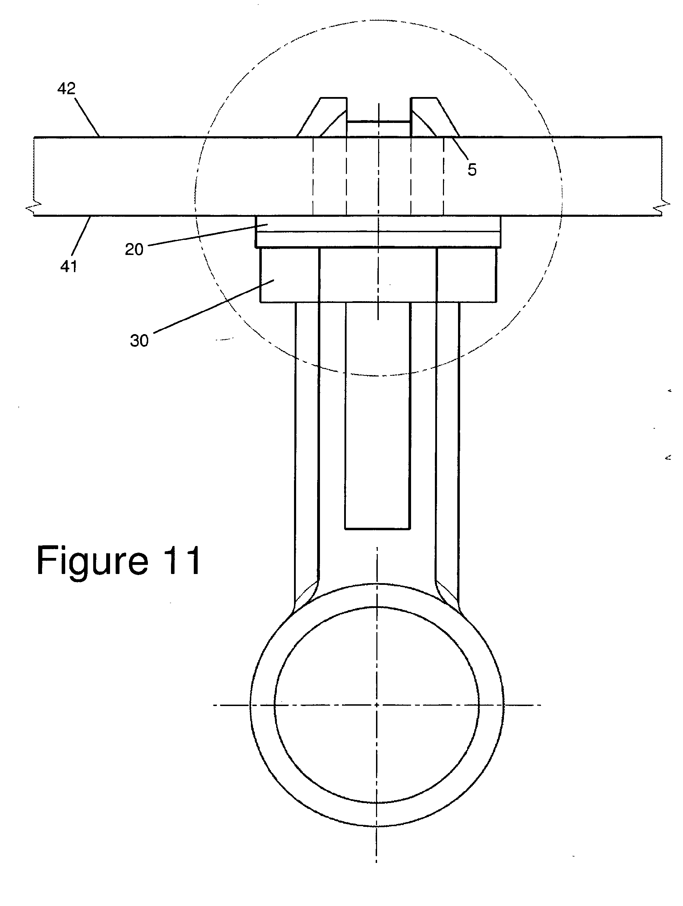

An internally threaded nut 30 shown in Figures 8 and 9 is carried by the shaft and can be spun along the thread 7 from the retracted position shown in Figures 1 and 10 to a locking position shown in Figure 11.

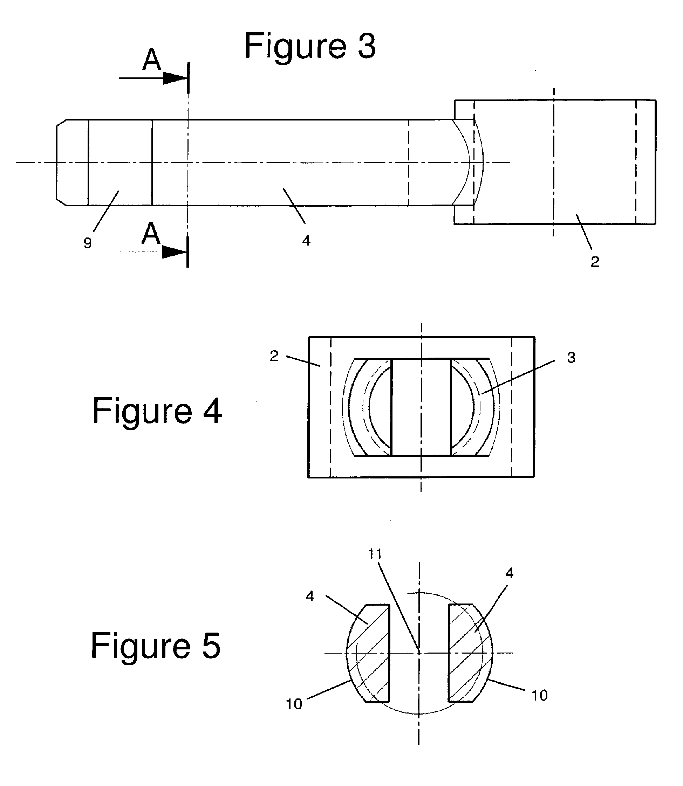

The bracket is fixed to a panel 40 by the method shown in Figures 10 and 11. First the legs 4 are compressed together between finger and thumb so the catches 3 can pass through a hole from the front face 41 to the rear face 42 of the panel. When the catches have passed through the hole, the legs are released so that they spring back. As shown in Figure 5, the legs 4 have curved outer faces 10 which lie on a cylinder which is concentric with the axis 11 of the shaft. Thus when the legs spring back, the faces 10 engage the cylindrical wall of the hole in the panel, or are at least concentric with the cylindrical wall of the hole.

Next the washer is slid axially along the shaft to a locking position where the rear face of the clamping plate 20 engages the front face 41 of the panel as shown in Figure 10. Next the nut 30 is spun along the thread until it engages the front face of the clamping plate 20 as shown in Figure 11, preventing the clamping plate and projection from withdrawing back along the shaft away from the catches 5.

Finally, the nut 30 is tightened so that the clamping plate 20 applies a compressive force to the front face of the panel and the faces 5 of the catches apply a compressive force to the rear face 42 of the panel. Compressing the panel 40 between the clamping plate 20 and catches 5 makes the bracket secure and unlikely to come loose due to vibration.

When the projection 22 is in its locking position between the catches as shown in Figures 10 and 11, it prevents them from collapsing radially inwardly to release the catches 5 from the rear face 42 of the panel. In its locking position shown in Figure 10, the projection 22 passes through the hole and beyond the rear face 42 of the panel. However if the panel 40 is thicker then the projection 22 may lie flush with the rear face 42.

The bracket can be removed by reversing the process described above.

Once the bracket is fixed in place as in Figure 11, the head 2 can then be used to hold a cylindrical object such as an aircraft fuel sensor, cable bundle, etc. Although a ringshaped head 2 is shown in this example, the head may have any required shape. Furthermore, the head 2 may be omitted entirely and the single-sided fitting used as a blind rivet for fastening together a pair of panels.

Optionally an anti-rotation feature (not shown) may be provided between the nut and the washer that prevents the nut from spinning backwards due to vibration.

Where the bracket is fitted within a fuel tank, then preferably the bracket is sealed to prevent fuel from passing through the hole in the panel. This may be achieved in a number of ways. For example a liquid sealing material may be applied to the unthreaded portion 9 of the shaft and the tab 22 before the bracket is fitted to the panel. After the bracket has been fitted, the liquid sealing material cures to provide a fuel-tight seal with the hole in the panel. The fact that the tab 22 substantially fills the gap between the two legs 4 makes it relatively easy to form a seal in this manner.

Although the invention has been described above with reference to one or more preferred embodiments, it will be appreciated that various changes or modifications may be made without departing from the scope of the invention as defined in the appended claims.

## Claims

1. A single-sided fitting (1) comprising a shaft with two or more axially extending legs (4), each leg having a catch (3) which extends radially outwardly from the leg, **characterised in that** the fitting further comprises: a clamping plate (20) with two or more holes (21) each receiving a respective one of the legs; a projection (22) which is carried by the clamping plate and extends axially between the legs towards the catches, the clamping plate and projection being axially movable along the shaft to a locking position where the projection is positioned between the catches thus preventing the catches from moving radially inwardly; and means (30) for preventing the clamping plate and projection from withdrawing back along the shaft away from the catches after they have been moved to the locking position.

2. The fitting (1) of claim 1 wherein the means for preventing the clamping plate and projection from moving back along the shaft comprises an internally threaded nut (30) which is carried by the shaft, the clamping plate (20) being positioned between the nut and the catches (3), wherein the nut can be spun along the shaft to engage the clamping plate in its locking position.

3. The fitting (1) of claim 2 wherein the nut (30) is carried by a thread (7) on the shaft which extends to a point (8) which is set back from the catches (3) by an unthreaded gap (9).

4. The fitting (1) of any preceding claim wherein the legs (4) are joined together at a head (2) of the shaft remote from the catches (3).

5. The fitting (1) of any preceding claim wherein the projection (22) substantially fills a gap between the legs (4) when it is in its locking position.

6. The fitting (1) of any preceding claim wherein the fitting is a bracket with a mounting part from which the shaft extends axially.

7. A joint comprising a structure (40) with a hole passing from a front face (41) of the structure to a rear face (42) of the structure; and a single-sided fitting (1) according to any preceding claim arranged with the shaft passing through the hole, the clamping plate (20) in its locking position applying a compressive force to the front face of the structure, the projection (22) positioned between the catches (3) thus preventing the catches from moving radially inwardly, and the catches applying a compressive force to the rear face of the structure.

8. The joint of claim 7 wherein the projection (22) passes through the hole and beyond the rear face (42) of the structure.

9. An aircraft comprising a joint according to claim 7 or 8.

10. A method of attaching a single-sided fitting (1) to a structure (40), the single-sided fitting comprising a shaft with two or more axially extending legs (4), each leg having a catch (3) which extends radially outwardly from the leg, the method comprising:
passing the shaft and the catches through a hole from a front face (41) of the structure to a rear face (42) of the structure;
moving the catches radially outwardly so they cannot be withdrawn back through the hole;
**characterised in that** the single sided fitting further comprises a clamping plate (20) with two or more holes (21) each receiving a respective one of the legs, and a projection (22) which is carried by the clamping plate and extends axially between the legs towards the catches and **in that** the method further comprises:
moving the clamping plate and projection axially along the shaft to a locking position in which the clamping plate engages the front face of the structure and the projection is positioned between the catches, thus preventing the catches from moving radially inwardly;
applying a compressive force to the front face of the structure with the clamping plate;
applying a compressive force to the rear face (42) of the structure with the catches; and
preventing the clamping plate and projection from withdrawing back along the shaft away from the catches after they have been moved to the locking position.

11. The method of claim 10 wherein the projection (22) passes through the hole and beyond the rear face (42) of the structure (40).

12. A method of disassembling the joint of claim 7, the method comprising: withdrawing the clamping plate (20) and projection (22) back along the shaft away from the catches (3); moving the catches radially inwardly; and withdrawing the shaft and the catches from the hole.

## Patentansprüche

1. Einseitiges Befestigungselement (1), umfassend einen Schaft mit zwei oder mehreren sich axial erstreckenden Schenkeln (4), wobei jeder Schenkel einen Schnapper (3) aufweist, der sich vom Schenkel radial nach außen erstreckt, **dadurch gekennzeichnet, dass** das Befestigungselement ferner umfasst: eine Klemmplatte (20) mit zwei oder mehr Löchern (21), die jeweils einen entsprechenden Schenkel aufnehmen, einen Vorsprung (22), der von der Klemmplatte getragen wird und sich axial zwischen den Schenkeln hin zu den Schnappern erstreckt, wobei die Klemmplatte und der Vorsprung axial entlang dem Schaft zu einer Sperrposition beweglich ist, in der der Vorsprung zwischen den Schnappern positioniert ist, wodurch die Schnapper daran gehindert werden, sich radial nach innen zu bewegen, und Mittel (30), um die Klemmplatte und den Vorsprung daran zu hindern, sich entlang dem Schaft weg von den Schnappern zurückzuziehen, nachdem sie zur Sperrposition bewegt worden sind.

2. Einseitiges Befestigungselement (1) nach Anspruch 1, wobei das Mittel, um die Klemmplatte und den Vorsprung daran zu hindern, sich entlang dem Schaft zurückzuziehen, eine Innengewindemutter (30) umfasst, die vom Schaft getragen wird, wobei die Klemmplatte (20) zwischen der Mutter und den Schnappern (3) angeordnet ist, wobei die Mutter entlang dem Schaft gedreht werden kann, um mit der Klemmplatte in ihrer Sperrposition in Eingriff zu kommen.

3. Einseitiges Befestigungselement (1) nach Anspruch 2, wobei die Mutter (30) von einem Gewinde (7) am Schaft getragen wird, das sich zu einem Punkt (8) erstreckt, der von den Schnappern (3) durch einen gewindelosen Zwischenraum (9) zurückgesetzt ist.

4. Einseitiges Befestigungselement (1) nach einem der vorherigen Ansprüche, wobei die Schenkel (4) an einem Kopf (2) des Schafts abseits von den Schnappern (3) miteinander verbunden sind.

5. Einseitiges Befestigungselement (1) nach einem der vorherigen Ansprüche, wobei der Vorsprung (22) im Wesentlichen eine Lücke zwischen den Schenkeln (4) füllt, wenn er sich in seiner Sperrposition befindet.

6. Einseitiges Befestigungselement (1) nach einem der vorherigen Ansprüche, wobei das Befestigungselement eine Halterung mit einem Befestigungsteil ist, von dem sich der Schaft axial erstreckt.

7. Verbindung, umfassend eine Struktur (40) mit einem Loch, das von einer Vorderseite (41) der Struktur zu einer Rückseite (42) der Struktur verläuft, und ein einseitiges Befestigungselement (1) nach einem der vorherigen Ansprüche, mit dem Schaft durch das Loch verlaufend angeordnet, wobei die Klemmplatte (20) in ihrer Sperrposition eine Kompressionskraft auf die Vorderseite der Struktur ausübt, der Vorsprung (22) zwischen den Schnappern (3) angeordnet ist, wodurch die Schnapper daran gehindert werden, sich radial nach innen zu bewegen, und die Schnapper eine Kompressionskraft auf die Rückseite der Struktur ausüben.

8. Verbindung nach Anspruch 7, wobei der Vorsprung (22) durch das Loch und über die Rückseite (42) der Struktur hinaus verläuft.

9. Flugzeug, umfassend eine Verbindung nach Anspruch 7 oder 8.

10. Verfahren zum Anbringen eines einseitigen Befestigungselements (1) an einer Struktur (40), wobei das einseitige Befestigungselement einen Schaft mit zwei oder mehreren sich axial erstreckenden Schenkeln (4) umfasst, wobei jeder Schenkel einen Schnapper (3) aufweist, der sich vom Schenkel radial nach außen erstreckt, wobei das Verfahren umfasst:
Durchführen des Schafts und der Schnapper durch ein Loch von einer Vorderseite (41) der Struktur zu einer Rückseite (42) der Struktur,
Bewegen der Schnapper radial nach außen, so dass sie nicht durch das Loch zurückgezogen werden können,
**dadurch gekennzeichnet, dass** das einseitige Befestigungselement ferner eine Klemmplatte (20) mit zwei oder mehr Löchern (21), die jeweils einen entsprechenden Schenkel aufnehmen, und einen Vorsprung (22) umfasst, der von der Klemmplatte getragen wird und sich axial zwischen den Schenkeln hin zu den Schnappern erstreckt, und dass das Verfahren ferner umfasst:
Bewegen der Klemmplatte und des Vorsprungs axial entlang dem Schaft zu einer Sperrposition, in der die Klemmplatte mit der Vorderseite der Struktur in Eingriff kommt und der Vorsprung zwischen den Schnappern angeordnet ist, wodurch die Schnapper daran gehindert werden, sich radial nach innen zu bewegen,
Ausüben einer Kompressionskraft auf die Vorderseite der Struktur mit der Klemmplatte,
Ausüben einer eine Kompressionskraft auf die Rückseite (42) der Struktur mit den Schnappern und
Hindern der Klemmplatte und des Vorsprungs daran, sich entlang dem Schaft weg von den Schnappern zurückzuziehen, nachdem sie zur Sperrposition bewegt worden sind.

11. Verfahren nach Anspruch 10, wobei der Vorsprung (22) durch das Loch und über die Rückseite (42) der Struktur (40) hinaus verläuft.

12. Verfahren zum Lösen der Verbindung nach Anspruch 7, wobei das Verfahren umfasst: Zurückziehen der Klemmplatte (20) und des Vorsprungs (22) entlang dem Schaft weg von den Schnappern (3), Bewegen der Schnapper radial nach innen und Zurückziehen des Schafts und der Schnapper aus dem Loch.

## Revendications

1. Installation monoface (1) comprenant une tige avec deux, ou plus, pattes (4) s'étendant axialement, chaque patte ayant un taquet (3) qui s'étend radialement vers l'extérieur depuis la patte, **caractérisée en ce que** l'installation comprend en outre : une plaque de serrage (20) avec deux, ou plus, trous (21) recevant chacun l'une des pattes respective ; une saillie (22) qui est supportée par la plaque de serrage et s'étend axialement entre les pattes vers les taquets, la plaque de serrage et la saillie étant axialement mobiles le long de la tige jusqu'à une position de blocage où la saillie est positionnée entre les taquets empêchant ainsi les taquets de se déplacer radialement vers l'intérieur ; et un moyen (30) pour empêcher la plaque de serrage et la saillie de se retirer le long de la tige loin des taquets après qu'elles ont été déplacées dans la position de blocage.

2. Installation (1) selon la revendication 1 dans laquelle le moyen pour empêcher la plaque de serrage et la saillie de reculer le long de la tige comprend un écrou intérieurement fileté (30) qui est supporté par la tige, la plaque de serrage (20) étant positionnée entre l'écrou et les taquets (3), dans laquelle l'écrou peut être tourné le long de la tige pour mettre en prise la plaque de serrage dans sa position de blocage.

3. Installation (1) selon la revendication 2 dans laquelle l'écrou (30) est supporté par un filetage (7) sur la tige qui s'étend jusqu'à un point (8) qui est écarté des taquets (3) d'un espace non fileté (9).

4. Installation (1) selon l'une quelconque des revendications précédentes dans laquelle les pattes (4) sont jointes l'une à l'autre au niveau d'une tête (2) de la tige éloignée des taquets (3).

5. Installation (1) selon l'une quelconque des revendications précédentes dans laquelle la saillie (22) remplit sensiblement un espace entre les pattes (4) quand elle est dans sa position de blocage.

6. Installation (1) selon l'une quelconque des revendications précédentes dans laquelle l'installation est un support avec une partie de montage à partir de laquelle la tige s'étend axialement.

7. Joint comprenant une structure (40) avec un trou passant d'une face avant (41) de la structure à une face arrière (42) de la structure ; et une installation monoface (1) selon l'une quelconque des revendications précédentes agencée avec la tige passant à travers le trou, la plaque de serrage (20) dans sa position de blocage appliquant une force de compression à la face avant de la structure, la saillie (22) positionnée entre les taquets (3) empêchant ainsi les taquets de se déplacer radialement vers l'intérieur, et les taquets appliquant une force de compression à la face arrière de la structure.

8. Joint selon la revendication 7 dans lequel la saillie (22) passe à travers le trou et au-delà de la face arrière (42) de la structure.

9. Avion comprenant un joint selon la revendication 7 ou 8.

10. Procédé de fixation d'une installation monoface (1) à une structure (40), l'installation monoface comprenant une tige avec deux, ou plus, pattes (4) s'étendant axialement, chaque patte ayant un taquet (3) qui s'étend radialement vers l'extérieur depuis la patte, le procédé comprenant :
le passage de la tige et des taquets à travers un trou depuis une face avant (41) de la structure jusqu'à une face arrière (42) de la structure ;
le déplacement des taquets radialement vers l'extérieur pour qu'ils ne puissent pas être retirés à travers le trou ;
**caractérisé en ce que** l'installation monoface comprend en outre une plaque de serrage (20) avec deux, ou plus, trous (21) recevant chacun l'une des pattes respective, et une saillie (22) qui est supportée par la plaque de serrage et s'étend axialement entre les pattes vers les taquets et **en ce que** le procédé comprend en outre :
le déplacement de la plaque de serrage et de la saillie axialement le long de la tige jusqu'à une position de blocage dans laquelle la plaque de serrage met en prise la face avant de la structure et la saillie est positionnée entre les taquets, empêchant ainsi les taquets de se déplacer radialement vers l'intérieur ;
l'application d'une force de compression à la face avant de la structure avec la plaque de serrage ;
l'application d'une force de compression à la face arrière (42) de la structure avec les taquets ; et
le fait d'empêcher la plaque de serrage et la saillie de se retirer le long de la tige loin des taquets après qu'elles ont été déplacées dans la position de blocage.

11. Procédé selon la revendication 10 dans lequel la saillie (22) passe à travers le trou et au-delà de la face arrière (42) de la structure (40).

12. Procédé de démontage du joint selon la revendication 7, le procédé comprenant : le retrait de la plaque de serrage (20) et de la saillie (22) le long de la tige loin des taquets (3) ; le déplacement des taquets axialement vers l'intérieur ; et le retrait de la tige et des taquets du trou.
